# EUROPÄISCHE PATENTSCHRIFT

(11) **EP 2 726 748 B1**
(45) Veröffentlichungstag und Bekanntmachung des Hinweises auf die Patenterteilung: **17.07.2019**
(21) Anmeldenummer: 12710895.9
(22) Anmeldetag: 09.03.2012
(51) Int. Cl.: F16B 11/00, B62D 27/02

(54) **FÜGEVERFAHREN ZUR STOFFSCHLÜSSIGEN ABSCHNITTSWEISEN VERBINDUNG ZUMINDEST ZWEIER BAUTEILE**
JOINING PROCESS FOR THE COHESIVE CONNECTION, IN SECTIONS, OF AT LEAST TWO COMPONENTS
PROCÉDÉ D'ASSEMBLAGE POUR ASSEMBLER PAR LIAISON DE MATIÈRE CERTAINES PARTIES D'AU MOINS DEUX PIÈCES

(30) Priorität: 30.06.2011 DE 102011107635; 01.07.2011 DE 102011107825
(43) Veröffentlichungstag der Anmeldung: 07.05.2014
(73) Patentinhaber: Adient Luxembourg Holding S.à r.l., 1855 Luxembourg (LU)
(72) Erfinder: NDAGIJIMANA, Robin, 41469 Neuss (DE); FLEISCHHEUER, Simon, 45470 Mülheim an der Ruhr (DE); MUND, Harald, 42697 Solingen (DE); PELLENZ, Wolfgang, 53340 Meckenheim (DE)
(74) Vertreter: Finger, Catrin
(86) Internationale Anmeldenummer: PCT/EP2012/054100
(87) Internationale Veröffentlichungsnummer: WO 2013/000591

(56) Entgegenhaltungen:
- EP-A1- 1 975 216
- DE-A1- 19 632 275
- JP-A- 2007 046 646
- JP-A- 2008 215 423
- JP-A- 2008 296 557
- JP-A- 2009 242 465
- JP-U- H0 642 436
- JP-U- H01 132 807
- JP-U- H01 149 063
- US-A1- 2003 088 983

## Beschreibung

Die Erfindung betrifft ein Fügeverfahren zur stoffschlüssigen zumindest abschnittsweisen Verbindung zumindest zweier Bauteile gemäß dem Oberbegriff des Anspruchs 1.

Im Stand der Technik werden Strukturelemente insbesondere von Fahrzeugrücksitzen aus miteinander verschweißten Stahl- und/oder Blechbauteilen gebildet.

Die JP H06 042436 U, die JP 2009 242465 A, die JP 2008 215423 A und die EP 1 975 216 A1 offenbaren jeweils ein Fügeverfahren zur stoffschlüssigen Verbindung zweier Teile. Dabei werden mindestens in eines der Teile Aussparungen oder Prägungen angeordnet, in die ein Adhäsionsmittel eingebracht wird.

Weiterhin sind aus der JP H01 132807 U und der US 2003/088983 A1 Verfahren bekannt, bei denen zwei Bauteile stoffschlüssig, insbesondere adhäsiv miteinander verbunden werden. Auch hier werden entsprechenden Prägungen in mindestens eines der Bauteile angeordnet, in die ein Adhäsionsmittel eingebracht wird.

Das Dokument JP 2008-296557A zeigt ein Fügeverfahren, bei dem zwei Profilbauteile stoffschlüssig verbunden werden, wobei eines Vorsprünge aufweist, zwischen denen ein Adhäsionsmittel aufgetragen wird.

Aufgabe der vorliegenden Erfindung ist es, ein gegenüber dem Stand der Technik verbessertes Fügeverfahren zur stoffschlüssigen Verbindung zumindest zweier Bauteile anzugeben.

Hinsichtlich des Fügeverfahrens zur stoffschlüssigen zumindest abschnittsweisen Verbindung zumindest zweier Bauteile wird die Aufgabe durch die im Anspruch 1 angegebenen Merkmale gelöst.

Vorteilhafte Weiterbildungen der Erfindung sind Gegenstand der Unteransprüche.

Beim Fügeverfahren zur stoffschlüssigen Verbindung zumindest zweier Bauteile wird erfindungsgemäß ein Profilbauteil mit einem flächig ausgeformten Bauteil stoffschlüssig verbunden, wobei in das flächig ausgeformte Bauteil zumindest ein Prägeabschnitt eingebracht wird, dessen Höhe korrespondierend zu einer Mindestschichtdicke der stoffschlüssigen Verbindung ausgebildet wird. Dadurch ist das Einhalten einer gleichmäßigen Schichtdicke der Adhäsionsverbindung entlang der gesamten Adhäsionsverbindung ermöglicht, wobei insbesondere ein Verkanten der beiden Bauteile zueinander und eine daraus resultierende ungleichmäßig ausgebildete Schichtdicke der Adhäsionsverbindung verhindert ist.

Mittels des Verfahrens hergestellte Hybridbauteile aus zwei einzelnen Bauteilen sind vorteilhafterweise gewichtsreduziert und besonders biegesteif.

Die stoffschlüssige Verbindung wird erfindungsgemäß als Adhäsionsverbindung ausgebildet, wobei zwischen Profilbauteil und Bauteil ein Adhäsionsmittel angeordnet ist.

Weiterhin weist das Profilbauteil erfindungsgemäß einen im Wesentlichen ebenen Flanschbereich auf, mittels welchem das Profilbauteil auf das flächig ausgeformte Bauteil aufgesetzt wird.

Bevorzugt wird in das flächig ausgeformte Bauteil zumindest ein Prägeabschnitt derart eingebracht, dass eine Breite des zumindest einen Prägeabschnitts mindestens einer Breite des Flanschbereichs entspricht.

Bedingt durch die gleichmäßige Schichtdicke der Adhäsionsverbindung ist vorteilhafterweise eine Belastbarkeit der Adhäsionsverbindung zwischen den beiden Bauteilen erhöht.

Zweckmäßigerweise wird zumindest ein Prägeabschnitt im Bauteil angeordnet, welcher sich entlang einer Längsausdehnung des Flanschbereichs des Profilbauteils erstreckt. Dabei wird der Prägeabschnitt korrespondierend zum Flanschbereich ausgeformt, wobei eine Breite des Flanschbereichs einer Breite des Prägeabschnitts entspricht und eine Höhe des Prägeabschnitts korrespondierend zu einer Mindestschichtdicke des Adhäsionsmittels der Adhäsionsverbindung ausgebildet wird. Dadurch sind besonders vorteilhafterweise Applikationstoleranzen des Adhäsionsmittels der Adhäsionsverbindung verringerbar, so dass eine hohe Wiederholgenauigkeit bei einer Massenproduktion ermöglicht ist.

Zweckmäßigerweise sind Abweichungen in einer effektiven Größe, insbesondere der Schichtdicke, der Adhäsionsverbindungen vermieden.

In einer alternativen Ausführungsvariante weist das Profilbauteil einen u-förmigen Querschnitt auf, an welchem beidseitig jeweils ein im

Wesentlichen ebener Flanschbereich ausgeformt wird. Dabei wird das u-förmige Profilbauteil mit seinen Flanschbereichen derart auf das Bauteil aufgesetzt, dass zwischen Profilbauteil und Bauteil ein Innenraum ausgebildet wird.

Vorteilhafterweise werden in das flächig ausgeformte Bauteil entlang einer Längsausdehnung der Flanschbereiche des Profilbauteils Prägeabschnitte eingebracht, deren Höhe korrespondierend zu einer Mindestschichtdicke der Adhäsionsverbindung ausgebildet ist und welche in Richtung des Profilbauteils erhaben ausgeformt und derart zwischen den Bauteilen angeordnet sind, dass sie die linienförmige oder nahezu linienförmige Adhäsionsverbindung zwischen den Bauteilen unterbrechen, wobei das auf dem Bauteil angeordnete Profilbauteil mit seinen Flanschbereichen zumindest abschnittsweise auf den Prägeabschnitten aufliegt. Dabei können die Prägeabschnitte die Flanschbereiche seitlich und/oder endseitig überragen.

Im Verlauf des Flanschbereichs sind somit Prägeabschnitte und mit Adhäsionsmittel beschichtete Abschnitte abwechselnd angeordnet. Insbesondere im Bereich der Prägeabschnitte ist kein Adhäsionsmittel angeordnet.

Auf diese Weise ist eine im Stand der Technik übliche großflächige stoffschlüssige Verbindung zwischen Profilbauteil und Bauteil vermieden. Besonders vorteilhafterweise sind die aus einer solchen großflächigen stoffschlüssigen Verbindung und den unterschiedlichen thermischen Ausdehnungen der Werkstoffe von Profilbauteil und Bauteil resultierenden Oberflächenunebenheiten, wie beispielweise Beulen oder Wellen, im erfindungsgemäß gefertigten Hybridbauteil sicher vermieden.

Erfindungsgemäß werden in den Prägeabschnitten und in den Flanschbereichen Aussparungen angeordnet, welche korrespondierend ausgeformt sind und bei der Ausbildung der Adhäsionsverbindung deckungsgleich übereinander angeordnet werden. Dadurch können beispielsweise mittels der Einführung eines Dorns oder eines ähnlichen Hilfsmittels die Bauteile bei der Ausbildung der Adhäsionsverbindung exakt zueinander ausgerichtet, positioniert und/oder fixiert werden. Zweckmäßigerweise kann die Adhäsionsverbindung zwischen Profilbauteil und Bauteil zusätzlich mittels mehrerer unlösbarer Nietverbindungen, welche in den Aussparungen ausbildbar sind, gesichert werden.

Anhand der beigefügten schematischen Figuren wird die Erfindung näher erläutert.

Dabei zeigen:
- Figur 1: schematisch eine stirnseitige Ansicht auf eine auszubildende Adhäsionsverbindung zwischen einem Profilbauteil und einem flächig ausgeformten Bauteil bei einem Adhäsionsmittelauftrag ohne Applikationstoleranz nach dem Stand der Technik,
- Figur 2: schematisch eine stirnseitige Ansicht auf eine ausgebildete Adhäsionsverbindung zwischen einem Profilbauteil und einem flächig ausgeformten Bauteil bei einem Adhäsionsmittelauftrag ohne Applikationstoleranz nach dem Stand der Technik,
- Figur 3: schematisch eine stirnseitige Ansicht auf eine auszubildende Adhäsionsverbindung zwischen einem Profilbauteil und einem flächig ausgeformten Bauteil bei einem Adhäsionsmittelauftrag mit Applikationstoleranz nach dem Stand der Technik,
- Figur 4: schematisch eine stirnseitige Ansicht auf eine ausgebildete Adhäsionsverbindung zwischen einem Profilbauteil und einem flächig ausgeformten Bauteil bei einem Adhäsionsmittelauftrag ohne Applikationstoleranz nach dem Stand der Technik,
- Figur 5 bis 8: schematisch einen Verfahrensablauf zu einer nicht erfindungsgemäßen Ausbildung einer Adhäsionsverbindung zwischen einem Profilbauteil und einem flächig ausgeformten Bauteil bei einem Adhäsionsmittelauftrag mit Applikationstoleranz und
- Figur 9: schematisch eine perspektivische Darstellung einer erfindungsgemäßen Ausführungsvariante eines aus zwei einzelnen Bauteilen mittels einer stoffschlüssigen Verbindung gebildeten Hybridbauteils.

Einander entsprechende Teile sind in allen Figuren mit den gleichen Bezugszeichen versehen.

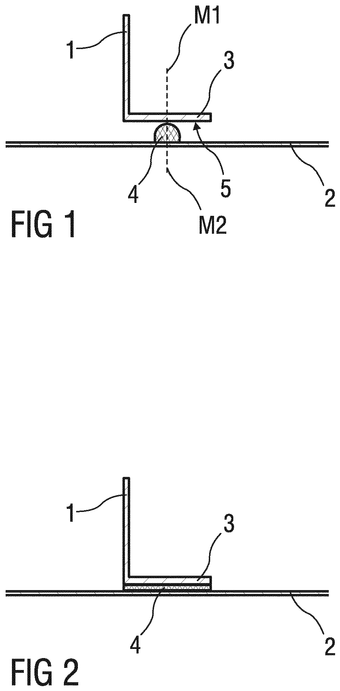

In Figur 1 ist schematisch eine stirnseitige Ansicht auf eine auszubildende Adhäsionsverbindung zwischen einem Profilbauteil 1 und einem flächig ausgeformten Bauteil 2 bei einem Adhäsionsmittelauftrag ohne Applikationstoleranz nach dem Stand der Technik dargestellt.

In Figur 2 ist schematisch eine stirnseitige Ansicht auf eine ausgebildete Adhäsionsverbindung zwischen einem Profilbauteil 1 und einem flächig ausgeformten Bauteil 2 bei einem Adhäsionsmittelauftrag ohne Applikationstoleranz nach dem Stand der Technik dargestellt.

In einer ersten Ausführungsvariante ist das Profilbauteil 1 vorzugsweise I-förmig ausgebildet und das Bauteil 2 ist vorzugsweise flächig ausgeformt. Dabei können das Profilbauteil 1 und das Bauteil 2 aus unterschiedlichen Materialien, beispielsweise Aluminium, Stahl oder Kunststoff, gebildet sein oder beide aus dem gleichen Material bestehen.

Am Profilbauteil 1 ist ein im Wesentlichen ebener Flanschbereich 3 ausgeformt.

Das Bauteil 2 ist beispielsweise als herkömmlicher, im Wesentlichen flacher Blechabschnitt ausgeformt, auf welchen das Profilbauteil 1 mit seinem Flanschbereich 3 aufgesetzt wird. Zwischen dem Bauteil 2 und dem Flanschbereich 3 des Profilbauteils 1 ist ein Adhäsionsmittel 4, beispielsweise ein herkömmlicher Kleber, zumindest abschnittsweise angeordnet, welches eine Adhäsionsverbindung ausbildet.

Bei einer Adhäsionsverbindung ohne Applikationstoleranz des Adhäsionsmittels 4, wobei der raupen- und/oder linienförmige Adhäsionsmittelauftrag, wie in den Figuren 1 und 2 dargestellt, zentral in einem mittleren Bereich der auszubildenden Adhäsionsverbindung erfolgt, entspricht eine effektive Größe der Adhäsionsverbindung einer Grundfläche 5 des Flanschbereichs 3 des Profilbauteils 1. Dabei wird unter der Applikationstoleranz eine Abweichung der Lage der Mittellinie M₁ des Flanschbereichs 3 von einer Lage einer Mittellinie M₂ des Adhäsionsmittels 4 verstanden. Bei einem Adhäsionsmittelauftrag ohne Applikationstoleranz sind die Mittellinien M₁ und M₂ deckungsgleich angeordnet.

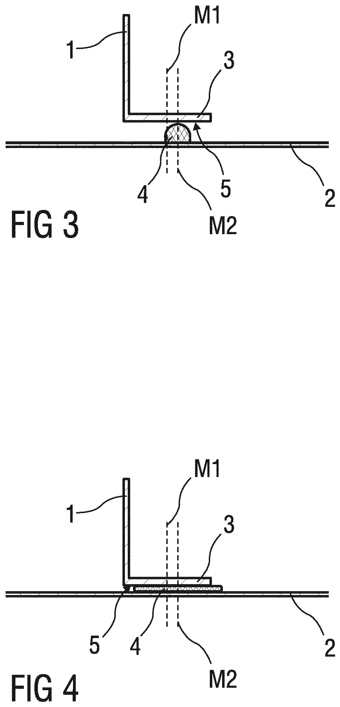

In Figur 3 ist schematisch eine stirnseitige Ansicht auf eine auszubildende Adhäsionsverbindung zwischen einem Profilbauteil 1 und einem flächig ausgeformten Bauteil 2 bei einem Adhäsionsmittelauftrag mit Applikationstoleranz nach dem Stand der Technik dargestellt.

In Figur 4 ist schematisch eine stirnseitige Ansicht auf eine ausgebildete Adhäsionsverbindung zwischen einem Profilbauteil 1 und einem flächig ausgeformten Bauteil 2 bei einem Adhäsionsmittelauftrag mit Applikationstoleranz nach dem Stand der Technik dargestellt.

Dabei erfolgt der raupen- und/oder linienförmige Adhäsionsmittelauftrag außermittig im Bereich der auszubildenden Adhäsionsverbindung, so dass die Lage der Mittellinie M₂ des Adhäsionsmittels 4 nicht deckungsgleich zur Lage der Mittellinie M₁ des Flanschbereichs 3 ausgerichtet ist. Dadurch erfolgt eine Verteilung des Adhäsionsmittels 4 unter dem Flanschbereich 3 ungleichmäßig. Dadurch benetzt das Adhäsionsmittel 4 die Grundfläche 5 des Flanschbereichs 3 nicht vollständig, so dass die effektive Größe der Adhäsionsverbindung im Vergleich zur Grundfläche 5 des Flanschbereichs 3 und eine daraus resultierende Belastbarkeit der Adhäsionsverbindung verkleinert ist.

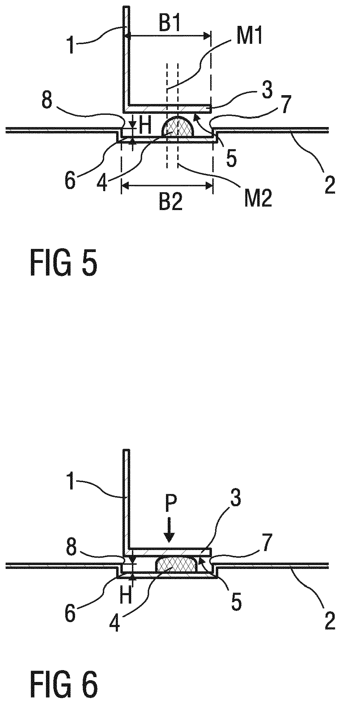

In den Figuren 5 bis 8 ist schematisch ein Verfahrensablauf zur Ausbildung einer Adhäsionsverbindung zwischen dem Profilbauteil 1 und dem flächig ausgeformten Bauteil 2 bei einem Adhäsionsmittelauftrag mit Applikationstoleranz dargestellt.

Dabei ist entlang einer Längsausdehnung des Flanschbereichs 3 des Profilbauteils 1 zumindest ein Prägeabschnitt 6 im Bauteil 2 angeordnet. Dabei ist der Prägeabschnitt 6 korrespondierend zum Flanschbereich 3 ausgeformt, insbesondere entspricht einen Breite B₁ des Flanschbereichs 3 einer Breite B₂ des Prägeabschnitts 6. Dieser Prägeabschnitt 6 ist vorzugsweise als herkömmliche Vertiefung ausgeformt und wird mittels eines herkömmlichen Prägeverfahrens in das Bauteil 2 eingebracht. Der Prägeabschnitt 6 ist in einer vom Profilbauteil 1 wegweisenden Richtung erhaben ausgeformt.

Eine Höhe H des Prägeabschnitts 6 ist korrespondierend zu einer Mindestschichtdicke des Adhäsionsmittels 4 der Adhäsionsverbindung ausgebildet.

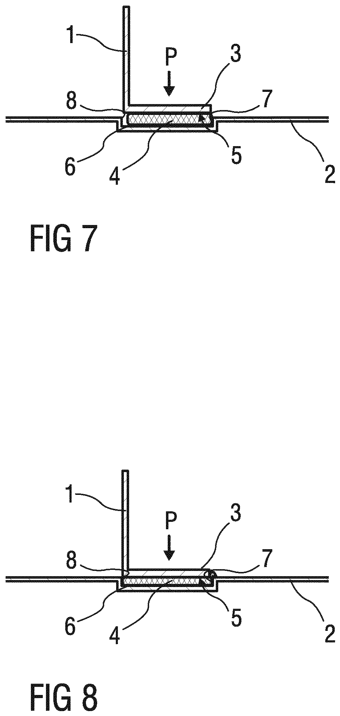

Bei der Herstellung der Adhäsionsverbindung zwischen dem Bauteil 2 und dem Flanschbereich 3 des Profilbauteils 1 erfolgt der raupen- und/oder linienförmige Adhäsionsmittelauftrag zentral im Prägeabschnitt 6. Dann wird das Profilbauteil 1 auf das Bauteil 2 und das Adhäsionsmittel 4 aufgesetzt. Dabei wird eine zur Ausbildung der Adhäsionsverbindung notwendige Presskraft P vorzugsweise im Flanschbereich 3 in das Profilbauteil 1 eingeleitet. Durch die Presskraft P bedingt wird das Adhäsionsmittel 4 gleichmäßig im Prägeabschnitt 6 verteilt. Sollte dabei eine Applikationstoleranz des Adhäsionsmittels 4 auftreten, stößt das sich ausbreitende Adhäsionsmittel 4 beim Niederdrücken des Profilbauteils 1 an eine Seitenkante 7 des Prägeabschnitts 6 wie in Figur 7 dargestellt, wodurch ein Fließwiderstand des Adhäsionsmittels 4 signifikant erhöht ist. Dadurch wird eine Fließrichtung des Adhäsionsmittels 4 vorwiegend in Richtung der gegenüberliegenden Seitenkante 8 des Prägeabschnitts 6 gelenkt, so dass trotz Applikationstoleranz des Adhäsionsmittels 4 eine gleichmäßige Verteilung des Adhäsionsmittels 4 im Prägeabschnitt 6 und an der Grundfläche 5 des Flanschbereichs 3 erfolgt.

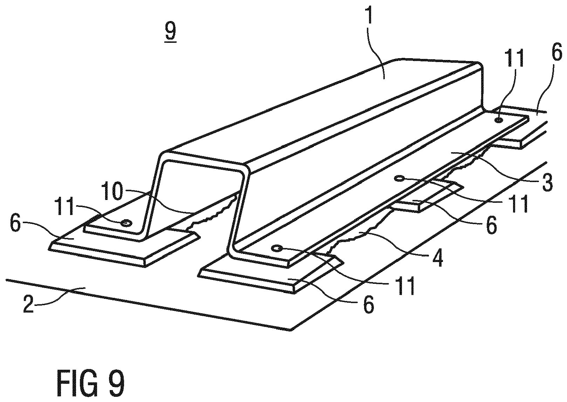

In Figur 9 ist schematisch eine perspektivische Darstellung einer alternativen Ausführungsvariante eines aus zwei einzelnen Bauteilen 1 und 2 mittels einer stoffschlüssigen Verbindung gebildeten Hybridbauteils 9 dargestellt.

Das Hybridbauteil 9 ist vorzugsweise aus einem u-förmigen Profilbauteil 1 und einem flächig ausgeformten Bauteil 2 gebildet. Dabei können das Profilbauteil 1 und das Bauteil 2 aus unterschiedlichen Materialien, beispielsweise Aluminium, Stahl oder Kunststoff, gebildet sein oder beide aus dem gleichen Material bestehen.

Am u-förmigen Profilbauteil 1 ist beidseitig jeweils ein im Wesentlichen ebener Flanschbereich 3 ausgeformt.

Das Bauteil 2 ist beispielsweise als herkömmlicher, im Wesentlichen flacher Blechabschnitt ausgeformt, auf welchen das u-förmige Profilbauteil 1 mit seinen Flanschbereichen 3 derart aufgesetzt wird, dass zwischen Profilbauteil 1 und Bauteil 2 ein Innenraum 10 gebildet ist.

Zwischen dem Bauteil 2 und den Flanschbereichen 3 des Profilbauteils 1 ist das Adhäsionsmittel 4 abschnittsweise angeordnet, welches eine Adhäsionsverbindung ausbildet.

Entlang einer Längsausdehnung der Flanschbereiche 3 des Profilbauteils 1 ist eine Mehrzahl von Prägeabschnitten 6 im Bauteil 2 angeordnet. Diese Prägeabschnitte 6 sind vorzugsweise als herkömmliche Vertiefung ausgeformt und werden mittels eines herkömmlichen Prägeverfahrens in das Bauteil 2 eingebracht. Die Prägeabschnitte 6 sind in Richtung des Profilbauteils 1 erhaben ausgeformt und derart zwischen Profilbauteil 1 und Bauteil 2 angeordnet, dass sie die linienförmige oder nahezu linienförmige Adhäsionsverbindung entlang der Flanschbereiche 3 unterbrechen.

Eine Höhe H der Prägeabschnitte 6 ist korrespondierend zu einer Mindestschichtdicke des Adhäsionsmittels 4 der Adhäsionsverbindung ausgebildet. Die Prägeabschnitte 6 sind derart korrespondierend zu den Flanschbereichen 3 ausgebildet, dass das auf dem Bauteil 2 angeordnete Profilbauteil 1 mit seinem Flanschbereichen 3 zumindest abschnittsweise auf den Prägeabschnitten 6 aufliegt. Dabei können die Prägeabschnitte 6 die Flanschbereiche 3 seitlich und/oder endseitig überragen.

Erfindungsgemäß sind in den Prägeabschnitten 6 und in den Flanschbereichen 3 Aussparungen 11 angeordnet, welche korrespondierend ausgeformt sind und deckungsgleich übereinander angeordnet werden.

Im Verlauf des Flanschbereichs 3 sind somit Prägeabschnitte 6 und mit Adhäsionsmittel 4 beschichtete Abschnitte in der in Figur 1 dargestellten Weise abwechselnd angeordnet. Insbesondere im Bereich der Prägeabschnitte 6 ist dabei kein Adhäsionsmittel 4 angeordnet.

Auf diese Weise ist eine im Stand der Technik übliche großflächige stoffschlüssige Verbindung zwischen Profilbauteil 1 und Bauteil 2 vermieden. Besonders vorteilhafterweise sind die aus einer solchen großflächigen stoffschlüssigen Verbindung und den unterschiedlichen thermischen Ausdehnungen der Werkstoffe von Profilbauteil 1 und Bauteil 2 resultierenden Oberflächenunebenheiten, wie beispielweise Beulen oder Wellen, im Hybridbauteil 9 sicher vermieden.

Bei der Herstellung der Adhäsionsverbindung zwischen dem Bauteil 2 und den Flanschbereichen 3 des Profilbauteils 1 wird das Adhäsionsmittel 4 zwischen den Prägeabschnitten 6 appliziert und das Profilbauteil 1 wird auf das Bauteil 2 aufgesetzt. Dabei wird eine zur Ausbildung der Adhäsionsverbindung notwendige Presskraft vorzugsweise im Bereich über den Prägeabschnitten 6 in die Flanschbereiche 3 eingeleitet. Liegen die Flanschbereiche 3 formschlüssig auf den Prägeabschnitten 6 auf, ist das Adhäsionsmittel 4 im übrigen Flanschbereich 3 mit einer gleichmäßigen Mindestschichtdicke verteilt, welche der Höhe H der Prägeabschnitte 6 entspricht.

In einer besonders vorteilhaften Ausführungsform können in die Aussparungen 11 in den Prägeabschnitte 6 und in den Flanschbereichen 3, welche deckungsgleich übereinander angeordnet werden, herkömmliche Dorne eingeführt werden, welche eine gleichmäßige Ausrichtung von Profilbauteil 1 und Bauteil 2 mit einer hohen Widerholgenauigkeit auch in einer Massenfertigung ermöglichen.

In einer alternativen Ausführungsform können in die Aussparungen 11 herkömmliche Befestigungsmittel reversibel eingebracht werden, welche nach einer Aushärtung des Adhäsionsmittels 4 entfernbar sind.

In einer weiteren vorteilhaften, nicht dargestellten Ausführungsform kann die Adhäsionsverbindung zwischen Profilbauteil 1 und Bauteil 2 zusätzlich mittels mehrerer unlösbarer Nietverbindungen, welche in den Aussparungen 11 ausbildbar sind, gesichert werden.

### Bezugszeichenliste

- 1: Profilbauteil
- 2: Bauteil
- 3: Flanschbereich
- 4: Adhäsionsmittel
- 5: Grundfläche
- 6: Prägeabschnitt
- 7: Seitenkante
- 8: gegenüberliegende Seitenkante
- 9: Hybridbauteil
- 10: Innenraum
- 11: Aussparung

- H: Höhe
- B₁, B₂: Breite
- M₁, M₂: Mittellinie
- P: Presskraft

## Patentansprüche

1. Fügeverfahren zur stoffschlüssigen Verbindung zumindest zweier Bauteile (1, 2), wobei
- ein Profilbauteil (1) mit einem flächig ausgeformten Bauteil (2) stoffschlüssig verbunden wird, wobei
- das Profilbauteil (1) zumindest einen im Wesentlichen ebenen Flanschbereich (3) aufweist,
- in das flächig ausgeformte Bauteil (2) zumindest ein Prägeabschnitt (6) korrespondierend zu dem Flanschbereich (3) eingebracht wird,
- die Prägeabschnitte (6) derart korrespondierend zu den Flanschbereichen (3) ausgebildet sind, dass das auf dem Bauteil (2) angeordnete Profilbauteil (1) mit seinen Flanschbereichen (3) zumindest abschnittsweise auf den Prägeabschnitten (6) aufliegt,
- die Prägeabschnitte (6) die Flanschbereiche (3) seitlich und/oder endseitig überragen können,
- eine Höhe (H) des zumindest einen Prägeabschnitts (6) korrespondierend zu einer Mindestschichtdicke der stoffschlüssigen Verbindung ausgebildet wird,
- die stoffschlüssige Verbindung als Adhäsionsverbindung ausgebildet wird,
- ein Adhäsionsmittel (4) zwischen den Prägeabschnitten (6) aufgetragen wird und dann das Profilbauteil (1) auf das flächig ausgeformte Bauteil (2) aufgesetzt wird, und
- in den Prägeabschnitten (6) und in den Flanschbereichen (3) Aussparungen (11) angeordnet werden, welche korrespondierend ausgeformt sind und bei der Ausbildung der Adhäsionsverbindung deckungsgleich übereinander angeordnet werden.

2. Fügeverfahren nach Anspruch 1,
**dadurch gekennzeichnet, dass** das Profilbauteil (1) einen u-förmigen Querschnitt aufweist, an welchem beidseitig jeweils ein im Wesentlichen ebener Flanschbereich (3) ausgeformt wird.

3. Fügeverfahren nach Anspruch 2,
**dadurch gekennzeichnet, dass** das u-förmige Profilbauteil (1) mit seinen Flanschbereichen (3) derart auf das Bauteil (2) aufgesetzt wird, dass zwischen Profilbauteil (1) und Bauteil (2) ein Innenraum (10) ausgebildet wird.

4. Fügeverfahren nach Anspruch 2 oder 3,
**dadurch gekennzeichnet, dass** in das flächig ausgeformte Bauteil (2) entlang einer Längsausdehnung der Flanschbereiche (3) des Profilbauteils (1) Prägeabschnitte (6) eingebracht werden, deren Höhe (H) korrespondierend zu einer Mindestschichtdicke der Adhäsionsverbindung ausgebildet ist und welche in Richtung des Profilbauteils (1) erhaben ausgeformt und derart zwischen den Bauteilen (1, 2) angeordnet sind, dass sie die linienförmige oder nahezu linienförmige Adhäsionsverbindung zwischen den Bauteilen (1, 2) unterbrechen, wobei das auf dem Bauteil (2) angeordnete Profilbauteil (1) mit seinen Flanschbereichen (3) zumindest abschnittsweise auf den Prägeabschnitten (6) aufliegt.

## Claims

1. Joining process for the material bond of at least two components (1, 2), wherein
- a profile component (1) is materially bonded to a two-dimensionally shaped component (2), wherein
- the profile component (1) has at least one substantially planar flange region (3),
- at least one stamped portion (6) corresponding to the flange region (3) is introduced into the two-dimensionally shaped component (2),
- the stamped portions (6) are designed so as to correspond to the flange regions (3) in such a manner that the profile component (1) which is arranged on the component (2) rests with the flange regions (3) thereof at least in sections on the stamped portions (6),
- the stamped portions (6) can protrude over the flange regions (3) laterally and/or on the end side,
- a height (H) of the at least one stamped portion (6) is designed so as to correspond to a minimum layer thickness of the material bond,
- the material bond is designed as an adhesive bond,
- an adhesive agent (4) is applied between the stamped portions (6) and then the profile component (1) is placed onto the two-dimensionally shaped component (2), and
- recesses (11) are arranged in the stamped portions (6) and in the flange regions (3), said recesses being formed so as to correspond and being arranged congruently one above another when the adhesive bond is formed.

2. Joining process according to Claim 1, **characterized in that** the profile component (1) has a U-shaped cross section on which a substantially planar flange region (3) is formed in each case on both sides.

3. Joining process according to Claim 2, **characterized in that** the U-shaped profile component (1) is placed with the flange regions (3) thereof onto the component (2) in such a manner that an interior space (10) is formed between profile component (1) and component (2).

4. Joining process according to Claim 2 or 3, **characterized in that** stamped portions (6) are introduced into the two-dimensionally shaped component (2) along a longitudinal extent of the flange regions (3) of the profile component (1), the height (H) of which stamped portions is designed so as to correspond to a minimum layer thickness of the adhesive bond and which stamped portions are formed raised in the direction of the profile component (1) and are arranged between the components (1, 2) in such a manner that they interrupt the linear or virtually linear adhesive bond between the components (1, 2), wherein the profile component (1) arranged on the component (2) rests with the flange regions (3) thereof at least in sections on the stamped portions (6).

## Revendications

1. Procédé de jonction pour le raccordement par liaison de matière entre au moins deux composants (1, 2)
- un composant profilé (1) étant relié avec un composant de forme plate (2) par liaison de matière,
- le composant profilé (1) comprenant au moins une partie de bride (3) globalement plane,
- dans le composant de forme plate (2) est formée au moins une portion estampée (6) correspondant à la partie de bride (3),
- les portions estampées (6) étant réalisées de manière à correspondre aux parties de brides (3) de façon à ce que le composant profilé (1) disposé sur le composant (2) s'appuie, avec ses parties de brides (3), au moins à certains endroits sur les portions estampées (6),
- les portions estampées (6) pouvant dépasser des parties de brides (3) latéralement et/ou au niveau de l'extrémité,
- une hauteur (H) de l'au moins une portion estampée (6) étant réalisée de manière à correspondre à une épaisseur de couche minimale du raccordement par liaison de matière,
- le raccordement par liaison de matière étant conçu comme une liaison par adhérence,
- un moyen d'adhérence (4) étant appliqué entre les portions estampées (6) puis le composant profilé (1) étant posé sur le composant de forme plate (2) et
- dans les portions estampées (6) et dans les parties de brides (3), des évidements (11) étant disposés, qui sont formés de manière correspondante et qui sont superposés de manière coextensive lors de la formation de la liaison d'adhérence.

2. Procédé de jonction selon la revendication 1, **caractérisé en ce que** le composant profilé (1) présente une section transversale en forme de U, sur laquelle une partie de bride (3) globalement plane est respectivement formée des deux côtés.

3. Procédé de jonction selon la revendication 2, **caractérisé en ce que** le composant profilé (1) en forme de U est posé, avec ses parties de brides (3) sur le composant (2) de façon à ce qu'un espace interne (10) soit formé entre le composant profilé (1) et le composant (2).

4. Procédé de jonction selon la revendication 2 ou 3, **caractérisé en ce que**, dans le composant (2) de forme plate, le long d'une extension longitudinale des parties de brides (3) du composant profilé (1) sont formées des portions estampées (6) dont la hauteur (H) est réalisée de manière à correspondre à une épaisseur de couche minimale de la liaison par adhérence et qui sont en relief en direction du composant profilé (1) et qui sont disposées entre les composants (1, 2) de façon à interrompre la liaison par adhérence linéaire ou presque linéaire entre les composants (1, 2), le composant profilé (1) disposé sur le composant (2) s'appuyant, avec ses parties de brides (3) au moins à certains endroits sur les portions estampées (6).
